# EUROPÄISCHE PATENTSCHRIFT

(11) **EP 3 899 486 B1**
(45) Veröffentlichungstag und Bekanntmachung des Hinweises auf die Patenterteilung: **20.07.2022**
(21) Anmeldenummer: 18825712.5
(22) Anmeldetag: 21.12.2018
(51) Int. Cl.: G01N 3/317

(54) **VORRICHTUNG UND VERFAHREN ZUR ERMITTLUNG MECHANISCHER EIGENSCHAFTEN EINES PRÜFKÖRPERS**
DEVICE AND METHOD FOR ASCERTAINING MECHANICAL PROPERTIES OF A TEST BODY
DISPOSITIF ET PROCÉDÉ DE DÉTERMINATION DE PROPRIÉTÉS MÉCANIQUES D'UNE ÉPROUVETTE

(43) Veröffentlichungstag der Anmeldung: 27.10.2021
(73) Patentinhaber: TMD Friction Services GmbH, 51381 Leverkusen (DE)
(72) Erfinder: SUETTI, Andre Garcia Lima, Jd Itapuan, Monte Mor - SP 13190-000 (BR)
(74) Vertreter: Weckenbrock, Matthias
(86) Internationale Anmeldenummer: PCT/EP2018/086516
(87) Internationale Veröffentlichungsnummer: WO 2020/126026

(56) Entgegenhaltungen:
- US-A- 3 850 031
- US-A- 4 860 572

## Beschreibung

Die Erfindung betrifft eine Vorrichtung und ein Verfahren zur Ermittlung mechanischer Eigenschaften, beispielsweise der Eigenfrequenz eines Prüfkörpers, insbesondere eines Bremsbelags für Kraftfahrzeuge, nach dem Oberbegriff des Anspruchs 1 und des Anspruches 11.

Mechanische Eigenschaften, wie beispielweise die Eigenfrequenz oder die modale Dämpfung eines Bauteils werden beispielsweise im Rahmen einer Qualitätskontrolle bei der Bauteilfertigung, insbesondere im Kraftfahrzeugbereich genutzt.

Bauteile, wie beispielsweise ein Bremsbelag eines Kraftfahrzeugs oder andere Teile in der Kraftfahrzeugentwicklung können bei der Herstellung Mängel aufweisen, welche im Betrieb unerwünschte Schwingungen, eine Überlast und dadurch bedingt unerwünschte Geräuschentwicklungen oder einen zusätzlichen Energieverbrauch verursachen. Derartige Schwingungen können durch veränderte physikalische Eigenschaften, geometrische Eigenschaften, Ungleichgewicht in rotierenden Teilen, ungleiche Reibung, Gewicht, Feuchtigkeit oder Spannung der Bauteile verursacht werden.

In der Automobilbremsindustrie ist einer der Qualitätsparameter von Bremsbelägen die Kompressibilität. Der Test zur Messung dieses Parameters ist jedoch oftmals sehr teuer und aufwendig, da er in einer großen Produktionslinie, in der eine auf Stichproben beruhende Komprimierungsanalyse verwendet wird, sehr schwer zu implementieren ist.

Im Allgemeinen wird das Schwingungsverhalten eines angeregten Prüfkörpers durch das Auftreten von Eigenschwingungen bei seinen Eigenfrequenzen bestimmt. Die Eigenschwingungen können verschiedene Formen aufweisen. Die Eigenfrequenzen sind System- bzw. Bauteilkennwerte, also für dieses Bauteil charakteristische Frequenzen. Zu jeder dieser Eigenfrequenzen gibt es eine zugehörige Eigenform, welches diejenige Verformung ist, die das zu analysierende Bauteil bei der Schwingung mit dieser Frequenz zeigen würde. Durch die Eigenfrequenz und die Eigenform eines Bauteils erhält man einen Hinweis, wie sich ein Körper oder ein System bei dynamischer Belastung verhält. Mit Hilfe einer Modalanalyse kann das auftretende Schwingungsverhalten des Prüfkörpers durch Ermittlung der Eigenfrequenzen und Eigenformen untersucht und quantifiziert werden. Die Ergebnisse der Modalanalyse, d.h. die Eigenwerte, Eigenfrequenzen und Eigenformen sind wichtige Parameter für die Auslegung einer Struktur bezüglich dynamischer Belastungen. Grundlagen des modalen Modells sind eine oder mehrere gemessene Übertragungsfunktionen.

Bei der Modalanalyse wird an einem Punkt des zu untersuchenden Prüfkörpers eine Kraft eingebracht, an einem weiteren Punkt das Antwortsignal bzw. die Reaktion des Prüfkörpers gemessen und daraus die Übertragungsfunktion berechnet. Durch die Bestimmung der Übertragungsfunktion an einer Vielzahl von Punkten des Prüfkörpers werden die sogenannten Modenformen, d.h. die Schwingungsformen ermittelt. Anhand dieser Informationen lässt sich das Schwingungsverhalten des Prüfkörpers bestimmen. Die ausschlaggebenden Faktoren für die Anzahl und die Verteilung der Eigenfrequenzen des Prüfkörpers sind die Geometrie und die physikalischen Eigenschaften des Material, d.h. die Masse und die Steifigkeit oder Dämpfung.

Zur Bestimmung der modalen Parameter wird der zu untersuchende Prüfkörper in der Regel mit einer geeigneten Erregerquelle, beispielsweise einem Impulshammer oder einem elektrodynamischen bzw. hydraulischen Shaker, durch einen Kraftstoß angeregt. Die anregende Kraft kann mit einem piezoelektrischen Kraftaufnehmer gemessen werden. Gleichzeitig werden die Strukturantworten, beispielsweise mit Beschleunigungsaufnehmern, Messmikrofonen oder mit Laser-Vibrometern erfasst. Über schnelle Fourier-Transformation (FFT/FRF) werden dann die Frequenzgänge, bzw. die Übertragungsfunktion zwischen Anregung und Antwort berechnet.

Bei der Impulshammer-Methode wird die Anregung des Prüfkörpers mittels eines Impulses vorzugsweise durch einen Modal- oder Impulshammer zur Ermittlung der Übertragungsfunktion erreicht. Ein Impulshammer ist ein ausgerüsteter Hammer zum Anregen des Prüfkörpers durch einen Impuls. Der Impulshammer kann mit einem Kraftsensor versehen sein.

Durch weitere am Prüfkörper angebrachte Sensoren kann die Übertragung dieses Impulses im Prüfkörper untersucht werden. Solche Untersuchungen erlauben Rückschlüsse, beispielsweise auf die strukturellen oder auf die akustischen Eigenschaften des Gegenstandes. Durch diese Methode können Materialfehler im Inneren eines jeweiligen Prüfkörpers, beispielsweise eines Bau- oder Werkstoffes festgestellt und deren Ausmaß bewertet werden. In der akustischen Messtechnik werden Impulshämmer zur Anregung von Körperschall genutzt.

Um das Übertragungsverhalten bestimmter Prüfkörper zu bestimmen wird mit dem Impulshammer der Prüfkörper mit einem in der Regel durch den Kraftsensor bekannten Kraftverlauf angeregt. Mit Körperschallaufnehmern kann die Schwingung des Prüfkörpers, und mit Mikrofonen der abgestrahlte Luftschall bestimmt werden. Aus diesen gemessenen Signalen kann das Übertragungsverhalten des Prüfkörpers berechnet werden.

Ein idealer Kraftstoß ist zeitlich nahezu unendlich kurz mit unendlicher Amplitude und ergibt so eine konstante spektrale Leistungsdichte über alle Frequenzen.

Für optimale Ergebnisse ist der Prüfkörper so zu lagern, dass dieser frei schwingen kann. Im Allgemeinen wird er elastisch aufgehängt oder auf einer Schaumstoffmatte gelagert.

Zur Vermeidung von störenden Geräuschen, beispielsweise im Kraftfahrzeug, werden aufwendige Verfahren angewendet, so beispielsweise bei Reibungsbremsen in Kraftfahrzeugen, welche bekanntlich dazu neigen, bei Ihrer Betätigung in unregelmäßiger Weise Geräusche zu erzeugen, die vom Menschen als unangenehm empfunden werden. Sofern die Frequenz der auftretenden Schwingungen in den Bereich der Eigenfrequenzen großflächiger Bremsenbauteile, bzw. des gesamten Bremsensystems gelangt, werden diese zu Schwingungen mit großflächig auftretenden Wegamplituden angeregt, wie sie bei Resonanzschwingungen im Falle relativ kleiner Dämpfung auftreten. Die daraus resultierenden Druckwellen in der Umgebungsatmosphäre dringen als Störgeräusche in das menschliche Gehör ein. Als Gegenmaßnahme werden die physikalischen Eigenschaften sowie die Geometrie des Bremsbelages sowie dessen Konstruktion so angepasst, dass das Auftreten unerwünschter Schwingungen möglichst unterdrückt wird. Dies ist jedoch ebenfalls nur schwer und auch dann nur unvollkommen realisierbar.

Die DE 199 03 757 A1 schlägt beispielsweise vor, dass die Schwingungsenergie, die bei mindestens einer reibungsinduzierten Anregungsfrequenz der Reibungsbremse bzw. -kupplung in ein Bremsen- bzw. Kupplungsbauteil eingetragen wird, durch Anregung mindestens eines mit dem Bauteil verbundenen Resonators umgesetzt wird, dessen erste Eigenfrequenz auf die Anregungsfrequenz eingestellt ist und dessen Fläche zur atmosphärischen Übertragung von Geräuschen nicht ausreicht. Aus diesem Grund ist eines der Bauteile mit mindestens einem Resonator verbunden, dessen erste Eigenfrequenz auf eine reibungsinduzierte Anregungsfrequenz der Brems- bzw. Kupplungsanlage eingestellt ist und dessen Fläche zur atmosphärischen Übertragung von Geräuschen nicht ausreicht.

Um Schwingungen eines Bauteils bereits vor dem Einbau, beispielsweise in ein Kraftfahrzeug detektieren zu können, werden im Allgemeinen Schwingungssensoren verwendet. Zur Analyse eines Prüfkörpers wird dieser in der Regel einer industriellen Produktionslinie entnommen und erst dann einer Analyse unterworfen. Aufgrund des aufwendigen Messverfahrens findet somit lediglich eine stichpunktartige Kontrolle einzelner Bauteile statt.

Aus der DE 248 438 A1 ist beispielsweise ein Verfahren zur zerstörungsfreien Prüfung von scheibenförmigen Körpern bekannt. Ein zu prüfendes Werkstück wird durch einen Schlag gegen seine Oberfläche in Schwingungen versetzt. Mit Hilfe eines Schwingungsaufnehmers werden die mechanischen Schwingungen des Werkstückes aufgenommen und in elektrische Schwingungssignale umgewandelt. Diese elektrischen Schwingungssignale werden einem Präzisions-Impuls-Schallpegelmesser zugeführt. Nach mehrfacher Verstärkung und Filtrierung wird ein frequenzbewertetes Wechselspannungssignal sowie ein Gleichspannungseffektivwert erzeugt, welche einer Auswerteschaltung zugeführt und elektronisch ausgewertet werden. Das zu prüfende Werkstück ist auf den sich bei der Schwingungserregung einstellenden Schwingungsknotenpumpen dämpfungs- und spannungsfrei gelagert. Der Schwingungserreger kann als Pendelkörper mit eingelassener gehärteter Stahlkugel ausgebildet sein, welche gegen die Oberfläche des Werkstücks einen Schlag ausführt, der den Körper in frei abklingende Schwingungen versetzt und gleichzeitig einen Ton erzeugt.

Aus der DE 10 2016 221 761 A1 ist ein Verfahren und eine Vorrichtung zum Handhaben von dynamischen Eigenschaften eines schwingenden Maschinenbauteils bekannt. Eine Analysevorrichtung überwacht die Schwingung des Maschinenbauteils in Echtzeit. Wenn die dynamischen Eigenschaften des Maschinenbauteils unter und nahe an einem Schwellwert sind, stellt die Analysevorrichtung einen Echtzeit-Hinweis darauf bereit, dass die Schwingung des Maschinenbauteils nahe an dem Schwellwert ist. Die Analysevorrichtung erhält die dynamischen Eigenschaften des Maschinenbauteils basierend auf Schwingungsdaten, die unter und nahe an dem Schwellwert sind. Eine Veränderung der dynamischen Eigenschaften beeinflusst, wie nahe die Schwingung an diesem Schwellwert ist.

Aus der EP 0 906 560 B1 ist ein Verfahren und eine Vorrichtung zur zerstörungsfreien Bestimmung von Steifigkeit, Festigkeit und/oder struktureller Eigenschaften eines Prüfobjekts bekannt. Das Prüfobjekt wird dazu in eine Prüfeinrichtung mit einem schwenkbaren Arm und mit einem Schlagkörper befördert. Mittels des Schlagkörpers wird das Prüfobjekt in freie Vibrationen mit wenigstens einer Eigenresonanzschwingung versetzt, so dass durch das Feststellen der Vibrationen mechanische Eigenschaften des Prüfobjekts festgestellt werden können.

Aus der US 3 850 031 A ist ein Verfahren zum Bestimmen der Zugspannungsverteilung über die Breite eines kaltgewalzten Bandes mit Hilfe von im Bereich von Bandlängszonen durchgeführten, berührungslosen Messungen sowie eine Vorrichtung zur Durchführung des Verfahrens bekannt.

Die US 4 860 572 A betrifft eine Vorrichtung zum Testen der Oberflächen- und Verbundmikroeigenschaften eines Materials, insbesondere von Festplatten mit Lese- und Schreibköpfen in Computersystemen, welche beispielsweise durch einen Kopfabsturz beschädigt werden können.

Schließlich ist aus der DE 10 2014 116 034 A1 eine Vorrichtung und ein Verfahren zur Ermittlung mechanischer Eigenschaften eines biegeschlaffen Messobjekts bekannt, welche eine erste Fixiervorrichtung aufweist, mit der das Messobjekt an einer ersten Stelle lösbar fest fixierbar ist, sowie eine zweite Fixiervorrichtung mit der das Messobjekt ein seiner der ersten Seite gegenüberliegenden Seite lösbar fest fixierbar ist. Die erste Fixiervorrichtung ist mit einem ersten Aktuator verbunden, durch welchen mechanische Anregungen in das Messobjekt einbringbar sind. Ferner weist die Vorrichtung eine Steuereinheit zur Steuerung des Aktuators sowie ein optisches Sensorsystem zum Abtasten einer 3D-Oberfläche des Messobjekts im fixierten Zustand auf. Die mechanischen Eigenschaften des Messobjekts werden mittels einer Modalanalyse durch eine erste und eine zweite Auswerteeinheit ermittelt.

Eine Voraussetzung für die Durchführung einer Modalanalyse und die daraus folgende Ableitung der Eigenfrequenzen einzelner Prüfkörper ist, dass der Prüfkörper sich während der Messung im so genannten "freien Schwingungszustand" befindet. Dies bedeutet, dass der Prüfkörper dynamisch von der physikalischen Umgebung isoliert ist und der Kontakt des Prüfkörpers mit anderen Oberflächen eliminiert wird. Im Idealfall muss sich der Prüfkörper in einem sogenannten "Schwebe-Zustand" befinden. Bekannte Verfahren zur Bestimmung der Eigenfrequenzen sehen jedoch eine Aufhängung des Prüfkörpers mittels flexibler Drähte oder Fäden oder das Auflegen des Prüfkörpers auf in der Regel weiche Schaumstoffmatten vor, so dass dieser "Schwebe-Zustand" nicht erreicht wird.

Nachteilig bei den Verfahren und Vorrichtungen aus dem Stand der Technik ist, dass auf Grund der aufwendigen Messverfahren eine Prüfung aller Bauteile, beispielsweise auf einer Produktionslinie, nicht stattfinden kann. Es findet lediglich nur eine Analyse einzelner Prüfkörper statt, welche beispielsweise einer Produktionslinie zur Prüfung entnommen werden müssen. Dieses Prüfverfahren ist daher sehr aufwendig und liefert nur stichpunkthaltige Ergebnisse.

Ebenfalls nachteilig bei den Verfahren und Vorrichtungen aus dem Stand der Technik ist, dass die dort eingesetzten Messvorrichtungen bewegliche Bauteile aufweisen, welche besonders störanfällig sind. Insbesondere bekannte Schlagaktuatoren verwenden ein Magnetsystem mit beweglichen Kolben.

Ausgehend von den zuvor beschriebenen Nachteilen liegt der Erfindung die Aufgabe zugrunde, eine Vorrichtung und ein Verfahren zur Ermittlung mechanischer Eigenschaften, beispielsweise der Eigenfrequenz oder der Eigenschwingform eines ferromagnetische Materialkomponenten aufweisenden Prüfkörpers anzugeben, die eine zuverlässige und schnelle Ermittlung der mechanischen Eigenschaften des Prüfkörpers ermöglicht.

Diese Aufgabe wird gelöst mit einer Vorrichtung zur Ermittlung mechanischer Eigenschaften eines Prüfkörpers nach Anspruch 1 und mit einem Verfahren nach Anspruch 11.

Die Erfindung betrifft eine Vorrichtung zur Ermittlung mechanischer Eigenschaften, beispielsweise der Eigenfrequenz, der modalen Dämpfung oder der Eigenschwingform eines ferromagnetische Materialkomponenten aufweisenden Prüfkörpers, welcher als Bremsbelag für ein Kraftfahrzeug ausgebildet ist.

Erfindungsgemäß ist ein elektromagnetischer Aktuator, insbesondere ein Elektromagnet, zum Ausüben einer magnetischen Anziehungskraft auf den Prüfkörper vorgesehen, so dass der Aktuator einen Kraftstoß auf den Prüfkörper ausübt und der Prüfkörper in Schwingungen versetzt wird, deren Spektrum mindestens eine Eigenfrequenzschwingung des Prüfkörpers enthält.

Der elektromechanische Aktuator übt eine magnetische Anziehungskraft auf den Prüfkörper aus, so dass dieser in Richtung des elektromagnetischen Aktuators angezogen wird, wenn die magnetische Anziehungskraft ausreichend dimensioniert ist. Diese Anziehungskraft ist derart bemessen, dass der Prüfkörper auf den Aktuator aufschlägt, so dass der Kraftstoß auf den Prüfkörper ausgeübt wird, wodurch die mechanischen Anregungen in den Prüfkörper eingeleitet werden.

Die Zeitdauer der magnetischen Anziehungskraft ist derart ausgelegt, dass der üblicherweise auf einem Arbeitstisch oder auf einem Transportband einer industriellen Produktionslinie liegende oder sich bewegende Prüfkörper nach oben zu dem über diesem Prüfkörper befindlichen Aktuator angezogen wird, so dass der Kraftstoß erfolgen kann.

Im Moment des Kraftstoßes befindet sich der Prüfkörper daher in einem sogenannten "Schwebe-Zustand", d.h. er ist dynamisch von der physikalischen Umgebung isoliert. Eine Aufhängung oder eine Dämpfung des Prüfkörpers mittels Schaumstoffmatten oder dergleichen, wie aus dem Stand der Technik bekannt, ist aus diesem Grund nicht notwendig. Aus diesem Grund kann die Vorrichtung in industrielle Prozesse mit Produktionslinien, Arbeitstischen usw. installiert werden, so dass die Voraussetzungen eines freien Schwingungszustands erhalten bleiben.

Da die Vorrichtung im Gegensatz zu den bekannten Schlagaktuatoren mit beweglichen Kolben keine beweglichen Teile aufweist, ergeben sich eine insgesamt längere Lebensdauer der Vorrichtung und darüber hinaus eine einfache Konstruktion.

Auf Grund der Erfindung ist es ferner möglich, einen Eigenfrequenztest durchzuführen, der auf einem Modularanalysetest basiert und schnell und kostengünstig und besonders vorteilhaft in einhundert Prozent der großtechnischen Bauteil-, insbesondere Bremsbelagproduktion implementiert werden kann. Aus diesem Grund stellt die vorliegende Erfindung einen wesentlichen Beitrag zur Automatisierung und Standardisierung des Modaltests von ferromagnetischen Prüfkörpern dar. Denn die Eigenfrequenz oder die Dämpfung der Prüfkörper können in einhundert Prozent der produzierten Teile anstatt nur in einzelnen Proben angewendet werden.

Wie erwähnt, kann ein Elektromagnet zum Anziehen des Prüfkörpers vorgesehen sein. Die Verwendung eines Elektromagneten zur Anregung der Eigenfrequenzen in dem Prüfkörper ist vorteilhaft, da so sowohl dessen magnetische Anziehungskraft als auch die Dauer derart einstellbar sind, dass der Prüfkörper zwar gegen den Betätigungskopf angezogen wird aber ein Haftenbleiben am Elektromagnet vermieden wird und eine Anregung im Frequenzbereich bis zu ca. 10kHz möglich ist. Auch kann durch die Steuerung des Elektromagneten ein mehrfaches Aufschlagen des Prüfköpers auf den Betätigungskopf vermieden werden.

Die Dauer des Aufpralls des Prüferkörpers auf den Betätigungskopf ist vergleichsweise kurz und liegt im hundertstel, bzw. Milli-Sekunden-Bereich.

Nach einer ersten vorteilhaften Ausgestaltung der Erfindung ist der Aktuator gegenüber dem Prüfkörper im Ausgangszustand, insbesondere mittels einer Haltevorrichtung, hängend angeordnet. Unter dem Ausgangszustand ist zu verstehen, dass keine magnetische Anziehungskraft des Aktuators auf den Prüfkörper einwirkt, so dass dieser ungestört auf einer Unterlage aufliegt. Die Haltevorrichtung mit dem Aktuator kann besonders einfach in eine bestehende Produktionslinie zur Qualitätssicherung eingesetzt werden, indem diese beispielsweise derart an eine Transporteinrichtung, insbesondere ein Förderband angeordnet wird, dass der im Betrieb, insbesondere an der Haltevorrichtung, hängend über den Prüfkörpern angeordnete Aktuator eine Messung von allen den Aktuator passierenden Prüfkörpern ermöglicht.

Da der Aktuator hängend angeordnet ist, liegen bei Kontakt des Prüfkörpers mit dem Aktuator während des Kraftstoßes freie Schwingungsbedingungen des Prüfkörpers vor. Denn der Prüfkörper wird durch die magnetische Anziehungskraft zum Zeitpunkt des Kraftstoßes in den Schwebezustand gebracht, so dass keine Halterungen, wie elastische Seile, oder Schaumstoffmatten notwendig sind.

Nach einer vorteilhaften Variante der Erfindung ist der Aktuator mittels wenigstens eines Dämpfungselementes an der Haltevorrichtung gehalten. Dieses Dämpfungselement kann als eine Unterlegscheibe ausgebildet sein, um die in der Vorrichtung erzeugten Schwingungen zu dämpfen, so dass eine hohe Stabilität der Vorrichtung während des Betriebs gewährleistet ist.

In einer weiteren vorteilhaften Ausgestaltung der Erfindung ist eine Transporteinrichtung zum Transportieren mehrerer Prüfkörper in Anordnung hintereinander durch die Vorrichtung vorgesehen. Der Aktuator übt die magnetische Anziehungskraft auf den Prüfkörper taktweise aus. Wie erwähnt, kann die Haltevorrichtung in eine industrielle Produktionslinie integriert sein. Üblicherweise werden Bauteile bei der Herstellung in einer industriellen Produktionslinie transportiert, beispielsweise auf einem Förderband hintereinander liegend angeordnet, insbesondere zum Transport von einem Fertigungsschritt zum nächsten. Am Ende des Fertigungsprozesses oder auch zur Zwischenanalyse der Bauteile kann die erfindungsgemäße Vorrichtung in diese Produktionslinie eingesetzt werden, um eine Analyse aller dort transportierten Bauteile zu gewährleisten.

Wenn ein Bauteil die Vorrichtung passiert, wird der Aktuator aktiviert, so dass die magnetische Anziehungskraft auf das Bauteil ausgeübt wird und dieser gegen den Aktuator zum Einleiten des Kraftstoßes hin angezogen wird. In der Regel werden die übrigen Bauteile in dieser Zeit mittels der Transporteinrichtung weiter bewegt. Nach der Analyse des Prüfkörpers wird der Aktuator stromlos geschaltet, so dass der Prüfkörper wieder auf die Transporteinrichtung zurückfällt und weiter transportiert wird.

Durch die taktweise Ausübung der magnetischen Anziehungskraft auf die Prüfkörper können diese mittels der Transporteinrichtung kontinuierlich weiterbewegt werden. Voraussetzung dafür ist, dass der Abstand zwischen benachbarten Prüfkörpern derart gewählt ist, dass eine Analyse aller Prüfkörper möglich ist und es nicht zu Kollisionen zwischen einzelnen Prüfkörpern kommt, indem der folgende Prüfkörper die Vorrichtung schon passiert, wenn noch eine Analyse eine Prüfkörpers stattfindet.

Zur Vermeidung von Messfehlern und Störungen bei der Analyse, kann die Transporteinrichtung aus einem nicht-ferromagnetischen Material hergestellt sein. Dadurch wird insbesondere verhindert, dass Teile der Transporteinrichtung, beispielsweise des Förderbandes, bei Einwirkung der magnetischen Anziehungskraft auf den Prüfkörper selbst mit angezogen bzw. angehoben werden.

Erfindungsgemäß weist der Aktuator einen Betätigungskopf zum Einleiten des Kraftstoßes auf den Prüfkörper auf. Die Bewegung, die Form, die Masse und die Steifigkeit des Betätigungskopfes sind so bestimmt, dass eine geeignete physikalische Beaufschlagung des Prüfkörpers in Bezug auf Frequenz und Energiegehalt erzielt wird. Der Betätigungskopf kann insbesondere einen vorspringenden Abschnitt aufweisen, damit ein nahezu punktuelles Einleiten des Kraftstoßes möglich ist, so dass der beaufschlagte Prüfkörper ein deutlich wahrnehmbares Schwingungsspektrum aufweist.

Der Betätigungskopf liefert durch seinen Schlagimpuls ein flaches, kontinuierliches Spektrum. Das Spektrum lässt sich durch Verwendung geeigneter Betätigungsköpfe auf den relevanten Frequenzbereich abstimmen. Der Betätigungskopf kann im Wesentlichen kalottenförmig oder pyramidenförmig ausgestaltet sein. Die Dauer bzw. Form des Anregungsspektrums ergibt sich aus der Masse und der Steifigkeit des Betätigungskopfes und seiner Struktur. Bei einer harten Struktur, welche durch einen relativ kleinen Betätigungskopf angeregt wird, beeinflusst vorwiegend die Steifigkeit des Betätigungskopfes das Spektrum. Durch die Verwendung von Betätigungsköpfen aus unterschiedlichen Materialien besteht die Möglichkeit, das Erregerspektrum an den zu untersuchenden Frequenzbereich anzupassen.

Der Betätigungskopf kann beispielsweise im Wesentlichen aus Stahl oder Kunststoff oder Gummi hergestellt sein. Zum einen wird dadurch sichergestellt, dass die Qualität des Kraftstoßes auf den Prüfkörper ausreichend ist und gleichzeitig eine gute Haltbarkeit des Betätigungskopfes gewährleistet ist.

Nach einer weiteren Ausführungsform der Erfindung ist eine Sensoreinheit zum optischen und/oder akustischen Erfassen der Eigenfrequenzschwingungen des angeregten Prüfkörpers, insbesondere ein Mikrofon oder ein Laser-Vibrometer vorgesehen.

Ein Laser-Vibrometer ist ein Messgerät zur Quantifizierung mechanischer Schwingungen. Es kann zur Messung von Schwingungsfrequenz und Schwingungsamplitude verwendet werden. Laserlicht wird auf die zu untersuchende Oberfläche fokussiert. Aufgrund des Doppler-Effektes verschiebt sich bei einer Bewegung der zu messenden Oberfläche, beispielsweise bei einer Schwingung des Prüfkörpers, die Frequenz des zurückgestreuten Laserlichts. Diese Frequenzverschiebung wird im Vibrometer mittels eines Interferometers ausgewertet und als Spannungssignale oder als digitaler Datenstrom ausgegeben. Derartige Vibrometer werden beispielsweise im Automobilbereich zur Vermessung von Schwingungsmoden einzelner Komponenten oder auch ganzer Fahrzeuge eingesetzt.

Ein Trigger dieser Sensoreinheit kann mit dem Beginn des Kraftstoßes synchronisiert sein. Aus diesem Grund kann die Vorrichtung gemäß einer weiteren vorteilhaften Variante eine Steuereinheit zur Steuerung des Aktuators und/oder zur Synchronisation der Sensoreinheit mit der Einleitung des Kraftstoßes auf den Prüfkörper aufweisen.

Gemäß einer weiteren vorteilhaften Ausgestaltung der Erfindung weist die Sensoreinheit einen Kraftsensor zum Messen einer Kraftfunktion auf. Der erfindungsgemäße Aktuator kann nicht nur dafür vorgesehen sein, Eigenfrequenzen des Prüfkörpers zu erfassen. Es kann ferner auch vorgesehen sein, dass ein in Reihe mit dem Aktuator geschalteter Kraftsensor die Kraftfunktion während des Kraftstoßes detektiert. Der Kraftsensor kann auf der anschlagenden Seite des Betätigungskopfes angeordnet sein. Die Messung des Kraftsignals gibt einen Aufschluss darüber mit welcher Kraft und welchem Spektrum der Kraftstoß erfolgt ist. Das Signal des Mikrofons bzw. Laser-Vibrometers kann mit dem Signal des Kraftsensors mathematisch verrechnet werden, beispielsweise um ungleiche Anregungen herauszurechnen.

In einer Weiterbildung der Erfindung ist eine Auswerteinrichtung zum Vergleich, zur Berechnung und/oder zur Prüfung von vorzugsweise mittels Sensoreinheit gemessenen und/oder gespeicherten Daten vorgesehen. Die Daten können zur Qualitätssicherung sowie zur Beurteilung des Fertigungsprozesses, gespeichert werden.

Durch eine Online Messung wird von jedem Bauteil eine Bewertung durchgeführt, ob dieses Bauteil fehlerfrei ist oder einen Mangel aufweist. Fehlerhafte Bauteile können durch eine Ausschleusevorrichtung dem weiteren Produktionsprozess entzogen werden.

Gemäß eines unabhängigen Gedankens der Erfindung ist ein Verfahren zur Ermittlung mechanischer Eigenschaften, beispielsweise der Eigenfrequenz, Dämpfung oder der Eigenschwingform eines ferromagnetische Materialkomponenten aufweisenden Prüfkörpers, insbesondere eines Bremsbelags für ein Kraftfahrzeug, mit einer zuvor beschriebenen Vorrichtung vorgesehen, wobei eine magnetische Anziehungskraft auf den Prüfkörper ausgeübt wird, um einen Kraftstoß in den Prüfkörper einzuleiten, so dass dieser in Schwingungen versetzt wird, deren Spektrum mindestens eine Eigenfrequenzschwingung des Prüfkörpers enthält.

Der Prüfkörper wird aufgrund der magnetischen Anziehungskraft in Richtung des Aktuators, insbesondere eines Betätigungskopfes des Aktuators bewegt und tritt mit diesem in Kontakt, so dass die Beaufschlagung des Prüfkörpers durch einen Kraftstoß des Prüfkörpers gegen den Betätigungskopf stattfindet.

Gemäß einer ersten vorteilhaften Ausgestaltung des erfindungsgemäßen Verfahrens liegen zum Zeitpunkt der Einwirkung des Betätigungskopfes im Wesentlichen freie Schwingungsbedingungen des Prüfkörpers vor.

Nach einer weiteren vorteilhaften Ausgestaltung der Erfindung werden Eigenfrequenzen, welche zu einer Eigenschwingung des Prüfkörpers gehören, gemessen und die gemessenen Eigenfrequenzen mit Referenz-Werten verglichen.

In einer weiteren Variante der Erfindung wird durch den Vergleich der gemessenen Werte mit den Referenz-Werten eine Übereinstimmung durchgeführt, welche als Basis zur Bestimmung der Werte für eine Kompressibilität des Prüfkörpers benutzt wird.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: die Vorrichtung zur Ermittlung mechanischer Eigenschaften eines Prüfkörpers in einer ersten Position a) in einer seitlichen Schnittdarstellung und b) in einer Schnittdarstellung von oben,
- Figur 2: die Vorrichtung nach Figur 1 a) in einer zweiten Position und
- Figur 3: ein schematisches Schaltbild der Vorrichtung gemäß Figur 1.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

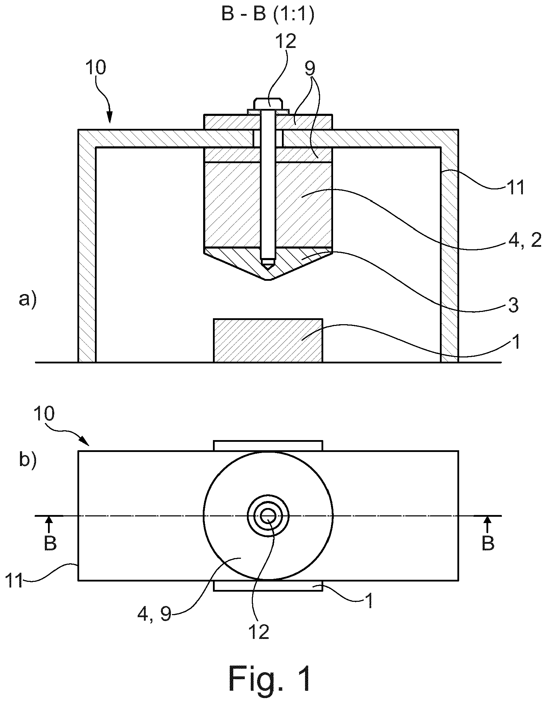

Aus Figur 1 geht eine Vorrichtung 10 zur Ermittlung mechanischer Eigenschaften, beispielsweise der Eigenfrequenz, Dämpfung oder der Eigenschwingform eines ferromagnetische Materialkomponenten aufweisenden Prüfkörpers 1, insbesondere eines Bremsbelags für ein Kraftfahrzeug hervor. Ein elektromagnetischer Aktuator 2, insbesondere ein Elektromagnet 4, ist zum Ausüben einer magnetischen Anziehungskraft auf den Prüfkörper 1 vorgesehen.

Diese magnetische Anziehungskraft ist derart bemessen, dass der Prüfkörper 1 in Richtung des Aktuators 2 angezogen wird, so dass der Aktuator 2 aufgrund der magnetischen Anziehungskraft einen Kraftstoß auf den Prüfkörper 1 ausübt. Der Prüfkörper 1 wird durch den Kraftstoß in Schwingungen versetzt, deren Spektrum mindestens eine Eigenfrequenzschwingung des Prüfkörpers 1 enthält.

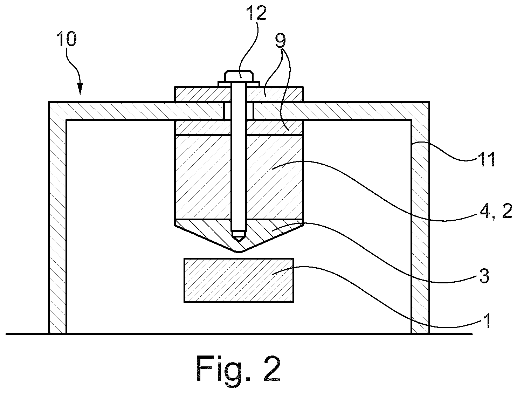

Wie aus den Figuren 1 und 2 hervorgeht, ist der Aktuator 2 gegenüber dem Prüfkörper 1 mittels einer Haltevorrichtung 11 hängend angeordnet. Der Aktuator 2 ist im vorliegenden Ausführungsbeispiel mittels einer Schraube 12 an der Haltevorrichtung 11 befestigt, so dass sich der Aktuator 2 in Betriebsstellung hängend über den zu prüfenden Bauteilen bzw. Prüfkörpern 1 befindet.

Der Aktuator 2 ist ferner mittels zwei Dämpfungselementen 9 an der Haltevorrichtung 11 gehalten. Diese Dämpfungselemente 9 können als Unterlegscheiben ausgebildet sein, um die beim Kraftstoß innerhalb der Vorrichtung 10 erzeugten Schwingungen zu dämpfen, so dass eine hohe Stabilität der Vorrichtung 10 während des Betriebs gewährleistet ist.

Der Aktuator 2 weist einen Betätigungskopf 3 zum Einleiten des Kraftstoßes auf den Prüfkörper 1 auf. Dieser Betätigungskopf 3 liefert durch seinen Schlagimpuls ein flaches, kontinuierliches Spektrum. Der Betätigungskopf 3 kann im Wesentlichen kalottenförmig oder pyramidenförmig ausgestaltet sein. Die Dauer bzw. Form des Anregungsspektrums ergibt sich aus der Masse und der Steifigkeit des Betätigungskopfes 3 und seiner Struktur. Durch die Verwendung von Betätigungsköpfen 3 aus unterschiedlichen Materialien besteht die Möglichkeit, das Erregerspektrum an den zu untersuchenden Frequenzbereich anzupassen.

Der Betätigungskopf 3 kann beispielsweise im Wesentlichen aus Stahl oder Kunststoff oder Gummi hergestellt sein.

Die Haltevorrichtung 11 mit dem Aktuator 2 kann in eine bestehende industrielle Produktionslinie zur Qualitätssicherung von Bauteilen eingesetzt werden, indem sie beispielsweise an eine Transporteinrichtung, insbesondere an ein Förderband angeordnet wird.

Zum Zeitpunkt der Aktivierung des Aktuators 2 wirkt die magnetische Anziehungskraft auf den Prüfkörper 1, so dass dieser in Richtung des hängenden Aktuators 2, also nach oben, angezogen wird, wie Figur 2 zeigt.

Wenn die magnetische Anziehungskraft ausreichend dimensioniert ist, schlägt er auf den Betätigungskopf 3 des Aktuators 2 auf, so dass der Kraftstoß auf den Prüfkörper 1 ausgeübt wird und mechanische Anregungen in den Prüfkörper 1 eingeleitet werden. Die Dauer des Aufpralls des Prüfkörpers 1 auf den Betätigungskopf 3 ist vergleichsweise kurz und liegt im hundertstel bzw. Milli-Sekunden-Bereich.

Da der Aktuator 2 hängend angeordnet ist, liegen bei Kontakt des Prüfkörpers 1 mit dem Aktuator 2 freie Schwingungsbedingungen des Prüfkörpers 1 vor. Denn der Prüfkörper 1 wird zum Zeitpunkt des Kraftstoßes in einen sogenannten Schwebezustand gebracht. In diesem Schwebezustand ist der Prüfkörper 1 dynamisch von der physikalischen Umgebung isoliert und hat keinen Kontakt mit anderen Oberflächen. Eine Aufhängung oder eine elastische Lagerung des Prüfkörpers 1 mittels Schaumstoffmatten oder dergleichen ist aus diesem Grund nicht notwendig.

Die Verwendung eines Elektromagneten 4 zur Anregung der Eigenfrequenzen in dem Prüfkörper 1 ist vorteilhaft, da sowohl der Betrag der magnetischen Anziehungskraft als auch die Zeitdauer der Aktivierung derart einstellbar sind, dass der Prüfkörper 1 zwar gegen den Betätigungskopf 3 angezogen wird aber ein Haftenbleiben am Elektromagnet 4 vermieden wird. Auch kann durch die Steuerung des Elektromagneten 4 ein mehrfaches Aufschlagen des Prüfköpers 1 auf den Betätigungskopf 3 verhindert werden.

Die Vorrichtung 10 kann bei industriellen Herstellungsverfahren besonders einfach und effektiv auch in bestehende Produktionslinien integriert werden. Üblicherweise ist in derartigen Produktionslinien eine Transporteinrichtung zum Transportieren mehrerer hintereinander angeordneter Bauteile vorgesehen.

Der Aktuator 2 einer derartig integrierten Vorrichtung 10 übt auf den zu analysierenden Prüfkörper 1 die magnetische Anziehungskraft für einen Kraftstoß aus. Die sich auf der Transporteinrichtung befindlichen übrigen Prüfkörper 1 werden in dieser Zeit mittels der Transporteinrichtung weiter bewegt. Nach Durchführung des Kraftstoßes auf den Prüfkörper 1 wird der Aktuator 2 stromlos geschaltet, so dass der Prüfkörper 1 wieder auf die Transporteinrichtung zurückfällt und weiter transportiert wird, ehe der nächste Prüfkörper magnetisch angezogen wird.

Durch die taktweise Ausübung der magnetischen Anziehungskraft auf die Prüfkörper 1 können diese mittels der Transporteinrichtung kontinuierlich weiterbewegt werden. Voraussetzung dafür ist, dass der Abstand zwischen benachbarten Prüfkörpern 1 derart gewählt ist, dass es nicht zu Kollisionen zwischen einzelnen Prüfkörpern 1 kommt, beispielsweise indem der folgende Prüfkörper 1 die Vorrichtung 10 schon passiert, wenn noch eine Analyse eines Prüfkörpers 1 stattfindet.

Zur Vermeidung von Messfehlern und Störungen bei der Analyse, kann die Transporteinrichtung aus einem nicht-ferromagnetischen Material hergestellt sein.

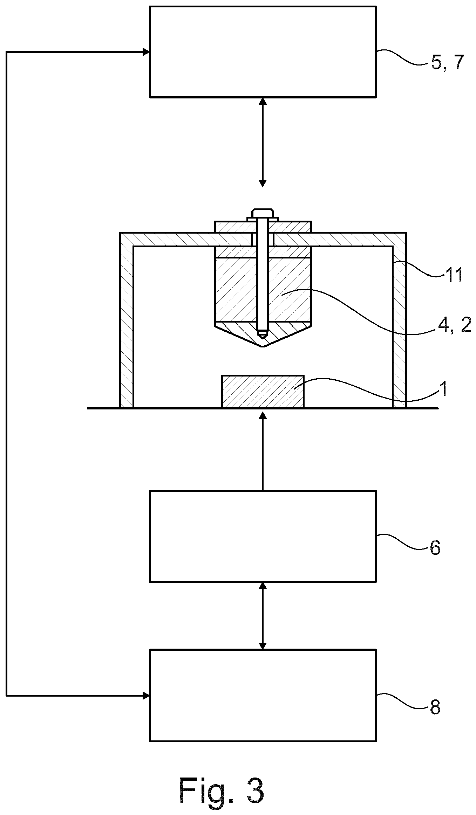

Wie die schematische Darstellung gemäß Figur 3 zeigt, werden mittels einer Sensoreinheit 5 die Eigenfrequenzen der Eigenfrequenzschwingungen des angeregten Prüfkörpers 1 optisch und/oder akustisch erfasst. Die Messung der Schwingung des Prüfkörpers 1 kann durch eine Sensoreinheit 5, wie beispielsweise einen Vibrationssensor, insbesondere ein Mikrofon oder ein Laser-Vibrometer durchgeführt werden. Der Trigger dieses Sensors 5 kann mit dem Beginn des Kraftstoßes synchronisiert sein. Aus diesem Grund kann die Vorrichtung 10 eine Steuereinheit 6 zur Steuerung des Aktuators 2 und/oder zur Synchronisation der Sensoreinheit 5 mit der Einleitung des Kraftstoßes auf den Prüfkörper 1 aufweisen.

Zusätzlich kann die Sensoreinheit 5 einen Kraftsensor 7 zum Messen einer Kraftfunktion vorsehen. Dieser Kraftsensor 7 kann mit dem Aktuator 2 in Reihe geschaltet sein und die Kraftfunktion während des Kraftstoßes detektieren. Die Messung des Kraftsignals gibt einen Aufschluss darüber mit welcher Kraft und welchem Spektrum der Kraftsoß erfolgt ist. Beispielsweise kann das Signal des Mikrofons / Laser-Vibrometers mit dem Signal des Kraftsensors 7 mathematisch verrechnet werden, sodass ungleiche Anregungen herausgerechnet werden können.

Zur Auswertung der gemessenen Daten ist eine Auswerteinrichtung 8 vorgesehen, in welcher ein Vergleich der gemessenen Daten mit beispielsweise zuvor abgelegten Referenzdaten stattfindet, um zu bestimmen, ob ein analysierter Prüfkörper 1 einen Mangel aufweist und möglicherweise auszusortieren ist. Auch kann eine Umrechnung und/oder Prüfung der gemessen Daten in der Auswerteeinrichtung 8 stattfinden.

Für den Fall, dass es sich bei dem Prüfkörper 1 um einen Bremsbelag handelt, welcher eine Bremsbelagträgerplatte mit einem daran angeordneten Reibbelag aufweist, wird dieser mit der Trägerplattenseite gegen den Betätigungskopf 3 des Aktuators 2 magnetisch angezogen, so dass der Kraftstoß auf der Trägerplattenseite des Bremsbelags eingeleitet wird. Dadurch wird der Bremsbelag in Schwingungen versetzt. Diese Schwingungen werden, wie bereits beschrieben, analysiert. Aus den derart gemessenen Eigenfrequenzen des Bremsbelags können Rückschlüsse auf die Kompressibilität des Bremsbelags und auf den Zustand des Bremsbelags geschlossen werden. Durch diese Messung wird von jedem Bauteil eine Bewertung durchgeführt, ob es fehlerfrei ist oder einen Mangel aufweist. Die mangelhaften Bauteile können durch eine Ausschleusevorrichtung dem weiteren Produktionsprozess entzogen werden.

Die gemessenen oder berechneten Daten können dazu verwendet werden, einen Fertigungsprozess zu überwachen, Teile, die aus einem definierten Streuband herausfallen, auszusortieren, oder Fehler zu detektieren.

Eine Entnahme einzelner Beläge für die Durchführung einer Qualitätsanalyse ist nicht notwendig, da alle Beläge durch die Vorrichtung zur Ermittlung mechanischer Eigenschaften überprüft werden.

Auf Grund der Erfindung ist es somit möglich, einen Eigenfrequenztest durchzuführen, der schnell und kostengünstig und besonders vorteilhaft in einhundert Prozent der großtechnischen Bauteil-, insbesondere Bremsbelagproduktion implementiert werden kann. Aus diesem Grund stellt die vorliegende Erfindung einen wesentlichen Beitrag zur Automatisierung und Standardisierung des Modaltests von ferromagnetischen Prüfkörpern 1 dar.

### Bezugszeichenliste

- 1: Prüfkörper
- 2: Elektromagnetischer Aktuator
- 3: Betätigungskopf
- 4: Elektromagnet
- 5: Sensoreinheit
- 6: Steuereinheit
- 7: Kraftsensor
- 8: Auswerteeinrichtung
- 9: Dämpfungselement
- 10: Vorrichtung
- 11: Haltevorrichtung
- 12: Schraube

## Patentansprüche

1. Vorrichtung (10) zur Ermittlung mechanischer Eigenschaften, beispielsweise der Eigenfrequenz, Dämpfung oder der Eigenschwingform eines ferromagnetische Materialkomponenten aufweisenden Prüfkörpers (1), welcher als ein Bremsbelag für ein Kraftfahrzeug ausgebildet ist, **dadurch gekennzeichnet, dass** ein elektromagnetischer Aktuator (2), insbesondere ein Elektromagnet, zum Ausüben einer magnetischen Anziehungskraft auf den Prüfkörper (1) vorgesehen ist, wobei der Prüfkörper (1) aufgrund der magnetischen Anziehungskraft in Richtung eines Betätigungskopfes (3) des Aktuators (2) bewegt wird und mit diesem in Kontakt tritt, so dass der Aktuator (2) mittels Betätigungskopf (3) einen Kraftstoß in den Prüfkörper (1) einleitet und der Prüfkörper (1) in Schwingungen versetzt wird, deren Spektrum mindestens eine Eigenfrequenzschwingung des Prüfkörpers (1) enthält.

2. Vorrichtung (10) nach Anspruch 1, **dadurch gekennzeichnet, dass** der Aktuator (2) gegenüber dem Prüfkörper (1) im Ausgangszustand mittels einer Haltevorrichtung (11) hängend angeordnet ist.

3. Vorrichtung (10) nach Anspruch 2, **dadurch gekennzeichnet, dass** der Aktuator (2) mittels wenigstens eines Dämpfungselementes (9) an der Haltevorrichtung (11) gehalten ist.

4. Vorrichtung (10) nach Anspruch 1 bis 3, **dadurch gekennzeichnet, dass** eine Transporteinrichtung zum Transportieren mehrerer Prüfkörper (1) in Anordnung hintereinander durch die Vorrichtung (10) vorgesehen ist und der Aktuator (2) die magnetische Anziehungskraft auf den Prüfkörper (1) taktweise ausübt.

5. Vorrichtung (10) nach Anspruch 4, **dadurch gekennzeichnet, dass** die Transporteinrichtung aus einem nicht-ferromagnetischen Material hergestellt ist.

6. Vorrichtung (10) nach einem der Ansprüche 1 bis 5, **dadurch gekennzeichnet, dass** eine Sensoreinheit (5) zum optischen und/oder akustischen Erfassen der Eigenfrequenzschwingungen des angeregten Prüfkörpers (1), insbesondere ein Mikrofon oder ein Laser-Vibrometer, vorgesehen ist.

7. Vorrichtung (10) nach Anspruch 6, **dadurch gekennzeichnet, dass** die Sensoreinheit (5) einen Kraftsensor (7) zum Messen einer Kraft-ZeitFunktion während des Stoßes aufweist.

8. Vorrichtung (10) nach einem der Ansprüche 1 bis 7, **dadurch gekennzeichnet, dass** eine Steuereinheit (6) zur Steuerung des Aktuators (2) und/oder zur Synchronisation der Sensoreinheit (5) mit der Einleitung des Kraftstoßes auf den Prüfkörper (1) vorgesehen ist.

9. Vorrichtung (10) nach einem der vorherigen Ansprüche, **dadurch gekennzeichnet, dass** eine Auswerteinrichtung (8) zum Vergleich, zur Berechnung und/oder zur Prüfung von vorzugsweise mittels Sensoreinheit (5) gemessenen und/oder gespeicherten Daten vorgesehen ist.

10. Vorrichtung nach Anspruch 1, **dadurch gekennzeichnet, dass** der Betätigungskopf (3) im Wesentlichen kalottenförmig oder pyramidenförmig ausgestaltet ist.

11. Verfahren zur Ermittlung mechanischer Eigenschaften, beispielsweise der Eigenfrequenz, Dämpfung oder der Eigenschwingform einer ferromagnetischen Materialkomponente aufweisenden Prüfkörpers (1), welcher als ein Bremsbelag für ein Kraftfahrzeug ausgebildet ist, mit einer Vorrichtung (10) nach einem der vorherigen Ansprüche, wobei eine magnetische Anziehungskraft auf den Prüfkörper (1) ausgeübt wird, wobei der Prüfkörper (1) aufgrund der magnetischen Anziehungskraft in Richtung eines Betätigungskopfes (3) des Aktuators (2) bewegt wird und mit diesem in Kontakt tritt, um einen Kraftstoß in den Prüfkörper (1) einzuleiten, so dass dieser in Schwingungen versetzt wird, deren Spektrum mindestens eine Eigenfrequenzschwingung des Prüfkörpers (1) enthält.

12. Verfahren nach Anspruch 11, **dadurch gekennzeichnet, dass** zum Zeitpunkt der Einwirkung des Betätigungskopfes (3) im Wesentlichen freie Schwingungsbedingungen des Prüfkörpers (1) vorliegen.

13. Verfahren nach einem der Ansprüche 11 oder 12, **dadurch gekennzeichnet, dass** Eigenfrequenzen, welche zu einer Eigenschwingung des Prüfkörpers (1) gehören, gemessen werden und dass die gemessenen Eigenfrequenzen mit Referenz-Werten verglichen werden.

14. Verfahren nach Anspruch 13, **dadurch gekennzeichnet, dass** durch den Vergleich der gemessenen Werte mit den Referenz-Werten eine Übereinstimmung durchgeführt wird, welche als Basis zur Bestimmung der Werte für eine Kompressibilität des Prüfkörpers (1) benutzt wird.

## Claims

1. Device (10) for ascertaining mechanical properties, for example the natural frequency, damping or form of natural vibration, of a test body (1) comprising ferromagnetic material components which is formed as a brake lining for a motor vehicle, **characterized in that** an electromagnetic actuator (2), in particular an electromagnet, is provided for exerting a magnetic force of attraction on the test body (1), wherein, as a result of the magnetic force of attraction, the test body (1) is moved in the direction of an actuating head (3) of the actuator (2) and comes into contact with it, so that the actuator (2) introduces a force impact into the test body (1) by means of the actuating head (3) and the test body (1) is made to undergo vibrations within the spectrum of which there is at least one natural frequency vibration of the test body (1).

2. Device (10) according to Claim 1, **characterized in that**, in the initial state, the actuator (2) is arranged in a suspended manner with respect to the test body (1) by means of a holding device (11).

3. Device (10) according to Claim 2, **characterized in that** the actuator (2) is held on the holding device (11) by means of at least one damping element (9).

4. Device (10) according to Claims 1 to 3, **characterized in that** a transporting means is provided for transporting a number of test bodies (1) in an arrangement one behind the other through the device (10) and the actuator (2) exerts the magnetic force of attraction on the test body (1) cyclically.

5. Device (10) according to Claim 4, **characterized in that** the transporting means is produced from a non-ferromagnetic material.

6. Device (10) according to one of Claims 1 to 5, **characterized in that** a sensor unit (5) is provided for optically and/or acoustically sensing the natural frequency vibrations of the excited test body (1), in particular a microphone or a laser vibrometer.

7. Device (10) according to Claim 6, **characterized in that** the sensor unit (5) has a force sensor (7) for measuring a force-time function during the impact.

8. Device (10) according to one of Claims 1 to 7, **characterized in that** a control unit (6) is provided for controlling the actuator (2) and/or for synchronizing the sensor unit (5) with the introduction of the force impact to the test body (1).

9. Device (10) according to one of the preceding claims, **characterized in that** an evaluation means (8) is provided for comparing, calculating and/or verifying data preferably measured and/or stored by means of the sensor unit (5).

10. Device according to Claim 1, **characterized in that** the actuating head (3) is designed as essentially dome-shaped or pyramid-shaped.

11. Method for ascertaining mechanical properties, for example the natural frequency, damping or form of natural vibration, of a test body (1) comprising ferromagnetic material components which is formed as a brake lining for a motor vehicle, with a device (10) according to one of the preceding claims, wherein a magnetic force of attraction is exerted on the test body (1), wherein, as a result of the magnetic force of attraction, the test body (1) is moved in the direction of an actuating head (3) of the actuator (2) and comes into contact with it in order to introduce a force impact into the test body (1), so that the latter is made to undergo vibrations within the spectrum of which there is at least one natural frequency vibration of the test body (1).

12. Method according to Claim 11, **characterized in that**, at the time at which the actuating head (3) is acted upon, the test body (1) is under essentially free vibrational conditions.

13. Method according to either of Claims 11 and 12, **characterized in that** natural frequencies that are associated with a natural vibration of the test body (1) are measured and **in that** the measured natural frequencies are compared with reference values.

14. Method according to Claim 13, **characterized in that** comparing the measured values with the reference values constitutes matching which is used as a basis for determining the values for compressibility of the test body (1).

## Revendications

1. Dispositif (10) permettant d'établir des propriétés mécaniques, par exemple la fréquence propre, l'amortissement ou la forme d'oscillation propre d'une éprouvette (1) présentant des composants matériels ferromagnétiques et réalisée sous forme de garniture de frein pour un véhicule automobile,
**caractérisé en ce qu'**un actionneur électromagnétique (2), en particulier un électroaimant, est prévu pour exercer une force d'attraction magnétique sur l'éprouvette (1), l'éprouvette (1) étant déplacée en raison de la force d'attraction magnétique en direction d'une tête d'actionnement (3) de l'actionneur (2) et entre en contact avec celle-ci, de sorte que l'actionneur (2) applique au moyen de la tête d'actionnement (3) une impulsion à l'éprouvette (1), et l'éprouvette (1) est soumise à des oscillations dont le spectre contient au moins une oscillation de fréquence propre de l'éprouvette (1).

2. Dispositif (10) selon la revendication 1, **caractérisé en ce qu'**à l'état initial, l'actionneur (2) est disposé en suspension par rapport à l'éprouvette (1) au moyen d'un dispositif de maintien (11).

3. Dispositif (10) selon la revendication 2, **caractérisé en ce que** l'actionneur (2) est maintenu sur le dispositif de maintien (11) au moyen d'au moins un élément d'amortissement (9).

4. Dispositif (10) selon les revendications 1 à 3, **caractérisé en ce qu'**un dispositif de transport servant à transporter plusieurs éprouvettes (1) dans l'ordre les unes après les autres à travers le dispositif (10) est prévu, et l'actionneur (2) exerce la force d'attraction magnétique sur l'éprouvette (1) de manière cyclique.

5. Dispositif (10) selon la revendication 4, **caractérisé en ce que** le dispositif de transport est fabriqué dans un matériau non ferromagnétique.

6. Dispositif (10) selon l'une quelconque des revendications 1 à 5, **caractérisé en ce qu'**une unité de capteur (5) pour la détection optique et/ou acoustique des oscillations de fréquence propre de l'éprouvette excitée (1), en particulier un microphone ou un vibromètre laser, est prévue.

7. Dispositif (10) selon la revendication 6, **caractérisé en ce que** l'unité de capteur (5) présente un capteur de force (7) servant à mesurer une fonction force-temps pendant l'impulsion.

8. Dispositif (10) selon l'une quelconque des revendications 1 à 7, **caractérisé en ce qu'**une unité de commande (6) servant à commander l'actionneur (2) et/ou à synchroniser l'unité de capteur (5) avec l'application de l'impulsion à l'éprouvette (1) est prévue.

9. Dispositif (10) selon l'une quelconque des revendications précédentes, **caractérisé en ce qu'**un dispositif d'évaluation (8) est prévu pour comparer, calculer et/ou vérifier des données mesurées et/ou stockées de préférence au moyen de l'unité de capteur (5).

10. Dispositif selon la revendication 1, **caractérisé en ce que** la tête d'actionnement (3) est configurée substantiellement en forme de calotte ou de pyramide.

11. Procédé permettant d'établir des propriétés mécaniques, par exemple la fréquence propre, l'amortissement ou la forme d'oscillation propre d'une éprouvette (1) présentant des composants matériels ferromagnétiques et réalisée sous forme de garniture de frein pour un véhicule automobile, comprenant un dispositif (10) selon l'une quelconque des revendications précédentes, dans lequel une force d'attraction magnétique est exercée sur l'éprouvette (1), l'éprouvette (1) étant déplacée en raison de la force d'attraction magnétique en direction d'une tête d'actionnement (3) de l'actionneur (2) et entrant en contact avec celle-ci afin d'appliquer une impulsion à l'éprouvette (1) de façon à la soumettre à des oscillations dont le spectre contient au moins une oscillation de fréquence propre de l'éprouvette (1 ).

12. Procédé selon la revendication 11, **caractérisé en ce que** des conditions d'oscillation substantiellement libres de l'éprouvette (1) prévalent au moment de l'effet de la tête d'actionnement (3).

13. Procédé selon l'une quelconque des revendications 11 ou 12, caractérisé en ce les fréquences de résonance qui appartiennent à une oscillation propre de l'éprouvette (1) sont mesurées, et en ce que les fréquences de résonance mesurées sont comparées avec des valeurs de référence.

14. Procédé selon la revendication 13, **caractérisé en ce que** la comparaison des valeurs mesurées avec les valeurs de référence permet d'établir une concordance qui est utilisée comme base pour la détermination des valeurs pour une compressibilité de l'éprouvette (1).
